(19) Europäisches Patentamt
European Patent Office
Office européen des brevets

(11) **EP 4 645 664 A1**

(12) **EUROPEAN PATENT APPLICATION**
published in accordance with Art. 153(4) EPC

(43) Date of publication:
**05.11.2025 Bulletin 2025/45**

(21) Application number: **23928208.0**

(22) Date of filing: **14.06.2023**

(51) International Patent Classification (IPC):
**H02M 3/158** (2006.01) **H02M 1/088** (2006.01)
**H02M 1/32** (2007.01)

(52) Cooperative Patent Classification (CPC):
**H02M 1/088; H02M 1/32; H02M 3/158; H03K 9/08;
Y02B 70/10**

(86) International application number:
**PCT/CN2023/100167**

(87) International publication number:
**WO 2024/192902 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.03.2023 CN 202310288056**

(71) Applicant: **Shenzhen Winline Technology Co.,
Ltd.
Shenzhen, Guangdong 518000 (CN)**

(72) Inventors:
• **ZHANG, Haidong**
  **Shenzhen, Guangdong 518000 (CN)**
• **ZHANG, Kaixuan**
  **Shenzhen, Guangdong 518000 (CN)**
• **CHEN, Xiaoping**
  **Shenzhen, Guangdong 518000 (CN)**
• **CHEN, Yanghao**
  **Shenzhen, Guangdong 518000 (CN)**
• **WU, Qiong**
  **Shenzhen, Guangdong 518000 (CN)**
• **ZHU, Jianguo**
  **Shenzhen, Guangdong 518000 (CN)**

(74) Representative: **Mathys & Squire
The Shard
32 London Bridge Street
London SE1 9SG (GB)**

(54) **BIDIRECTIONAL NON-ISOLATED DCDC TOPOLOGY CONTROL CIRCUIT AND RELATED DEVICE**

(57) A bidirectional non-isolated direct current to direct current (DC-DC) topology control circuit and a related apparatus are provided in embodiments of the disclosure. The bidirectional non-isolated DC-DC topology control circuit includes a bidirectional non-isolated DC-DC topology circuit. The bidirectional non-isolated DC-DC topology circuit includes an input voltage, a first switch transistor, a second switch transistor, a third switch transistor, a fourth switch transistor, a first input capacitor, a second input capacitor, a first output capacitor, a second output capacitor, a first energy-storage inductor, a second energy-storage inductor, and an output voltage. Compared to the non-isolated DC-DC power supply topologies in practical applications, this topology circuit can achieve both boost and buck functions while ensuring balanced voltage stress across switch components. By designing a capacitor midpoint connection between input and output, circulating current in multi-module parallel configurations may be effectively solved.

FIG. 2

EP 4 645 664 A1

**Description**

This application claims priority to Chinese Patent Application No. 2023102880560, filed March 23, 2023, and entitled "BIDIRECTIONAL NON-ISOLATED DC-DC TOPOLOGY CONTROL CIRCUIT AND RELATED APPARATUS", the entire disclosure of which is incorporated herein by reference.

TECHNICAL FIELD

The present disclosure relates to the field of direct current to direct current (DC-DC) conversion technology in the new energy industry, and in particular, to a bidirectional non-isolated DC-DC topology control circuit and related apparatus.

BACKGROUND

Currently, with the vigorous development of the new energy industry and novel batteries, the form of electrical energy conversion has gradually evolved from traditional unidirectional flow to bidirectional flow, thereby promoting increasingly diverse application scenarios for new electrical energy. Compared with bidirectional isolated direct current to direct current (DC-DC) power supplies, bidirectional non-isolated DC-DC power supplies exhibit higher conversion efficiency and lower design costs. However, among numerous non-isolated DC-DC power supply topologies, one or multiple of the following issues persist as follows. 1, a boost/buck direction between input voltage and output voltage is fixed; 2, a direct conductive path exists between the positive and negative terminals of an input end and the positive and negative terminals of an output end, resulting in circulating currents that cannot be suppressed in a topology when multiple modules are connected in parallel; 3, voltage stress on individual components is high, making them unsuitable for high-voltage input/output designs.

SUMMARY

The disclosure provides a bidirectional non-isolated direct current to direct current (DC-DC) topology control circuit and a related apparatus, so as to improve the comprehensiveness on operations of voltage boost/buck and the flexibility on circuit design for such bidirectional non-isolated DC-DC topology circuits.

In a first aspect, an embodiment of the disclosure provides a bidirectional non-isolated DC-DC topology control circuit. The bidirectional non-isolated DC-DC topology control circuit includes a bidirectional non-isolated DC-DC topology circuit. The bidirectional non-isolated DC-DC topology circuit includes: an input voltage, a first switch transistor, a second switch transistor, a third switch transistor, a fourth switch transistor, a first input capacitor, a second input capacitor, a first output capacitor, a second output capacitor, a first energy-storage inductor, a second energy-storage inductor, and an output voltage. A positive terminal of the input voltage is connected to a first terminal of the first input capacitor and a third terminal of the first switch transistor, respectively. A second terminal of the first input capacitor is connected to a fifth terminal of the second input capacitor. A sixth terminal of the second input capacitor is connected to a negative terminal of the input voltage and a seventh terminal of the second switch transistor, respectively. An eighth terminal of the second switch transistor is connected to a ninth terminal of the second energy-storage inductor and a nineteenth terminal of the fourth switch transistor, respectively. A tenth terminal of the second energy-storage inductor is connected to an eleventh terminal of the first energy-storage inductor. A twelfth terminal of the first energy-storage inductor is connected to a fourth terminal of the first switch transistor and a thirteenth terminal of the third switch transistor, respectively. A fourteenth terminal of the third switch transistor is connected to a fifteenth terminal of the first output capacitor and a negative terminal of the output voltage, respectively. A sixteenth terminal of the first output capacitor is connected to a seventeenth terminal of the second output capacitor. An eighteenth terminal of the second output capacitor is connected to a twentieth terminal of the fourth switch transistor and a positive terminal of the output voltage, respectively. The second terminal of the first input capacitor and the fifth terminal of the second input capacitor are respectively connected to the sixteenth terminal of the first output capacitor and the seventeenth terminal of the second output capacitor, and are connected to the eleventh terminal of the first energy-storage inductor and the tenth terminal of the second energy-storage inductor to form a node O.

In a possible embodiment, the bidirectional non-isolated DC-DC topology control circuit further includes a drive control module. The drive control module is coupled and connected to the first switch transistor, the second switch transistor, the third switch transistor, and the fourth switch transistor. The drive control module is configured to transmit a switch-transistor drive signal to control on or off of the first switch transistor, the second switch transistor, the third switch transistor, and the fourth switch transistor.

In a possible embodiment, a control mode of the drive control module includes an interleaved wave-emitting control mode. The switch-transistor drive signal includes a first switch-transistor drive signal and a second switch-transistor drive signal. Under the interleaved wave-emitting control mode, in terms of transmitting the switch-transistor drive signal to control on or off of the first switch transistor, the second switch transistor, the third switch transistor, and the fourth switch transistor, the drive control module is configured to transmit the first switch-transistor drive signal to control on or off of the first switch transistor and the third switch transistor; and transmit the second switch-transistor drive signal to control on or off of the second switch transistor and the fourth switch transistor.

In a possible embodiment, a control mode of the drive control module includes a synchronous wave-emitting control mode. Under the synchronous wave-emitting control mode, in terms of transmitting the switch-transistor drive signal to control on or off of the first switch transistor, the second switch transistor, the third switch transistor, and the fourth switch transistor, the drive control module is configured to transmit the switch-transistor drive signal to control synchronous on or off of the first switch transistor and the second switch transistor, and control synchronous on or off of the third switch transistor and the fourth switch transistor.

In a possible embodiment, the bidirectional non-isolated DC-DC topology control circuit further includes an input-voltage sampling module, an output-voltage sampling module, an output-current sampling module, an output-voltage balancing compensation module, a modulation generator assembly, and a loop compensation calculation assembly. The input-voltage sampling module is coupled in parallel with the first input capacitor and the second input capacitor. The output-voltage sampling module is coupled in parallel with the first output capacitor and the second output capacitor. The input-voltage sampling module is connected to the modulation generator assembly. The output-voltage sampling module is connected to the loop compensation calculation assembly and the output-voltage balancing compensation module, respectively. The output-current sampling module is coupled in series with the output voltage. The output-current sampling module is connected to the loop compensation calculation assembly. The modulation generator assembly is connected to the output-voltage balancing compensation module, the loop compensation calculation assembly, the first switch transistor, the second switch transistor, the third switch transistor, and the fourth switch transistor, respectively. The input-voltage sampling module is configured to sample a first-input-capacitor voltage of the first input capacitor and a second-input-capacitor voltage of the second input capacitor, and determine an input total voltage based on the first-input-capacitor voltage and the second-input-capacitor voltage. The output-voltage sampling module is configured to sample a first-output-capacitor voltage of the first output capacitor and a second-output-capacitor voltage of the second output capacitor, and determine an output total voltage and an output voltage difference based on the first-output-capacitor voltage and the second-output-capacitor voltage. The output-current sampling module is configured to sample an output total current corresponding to the output voltage. The output-voltage balancing compensation module is configured to, based on the output voltage difference determined by the output-voltage sampling module, multiply the output voltage difference and a pre-stored output-voltage balancing compensation coefficient to obtain a balancing compensation result. The loop compensation calculation assembly is configured to obtain a loop output result based on the output total voltage determined by the output-voltage sampling module and the output total current sampled by the output-current sampling module. The modulation generator assembly is configured to determine a wave-emitting duty cycle corresponding to each switch transistor based on the loop output result determined by the loop compensation calculation assembly, the balancing compensation result determined by the output-voltage balancing compensation module, the input total voltage determined by the input-voltage sampling module, and the output total voltage determined by the output-voltage sampling module. The wave-emitting duty cycle corresponding to each switch transistor includes a first wave-emitting duty cycle corresponding to the first switch transistor, a second wave-emitting duty cycle corresponding to the second switch transistor, a third wave-emitting duty cycle corresponding to the third switch transistor, and a fourth wave-emitting duty cycle corresponding to the fourth switch transistor. The modulation generator assembly is further configured to transmit a transistor drive signal to each switch transistor based on the first wave-emitting duty cycle, the second wave-emitting duty cycle, the third wave-emitting duty cycle, and the fourth wave-emitting duty cycle to control on or off of a corresponding switch transistor.

In a possible embodiment, the loop compensation calculation assembly includes a voltage-loop output-result calculation module, a current-loop output-result calculation module, and a minimum-value determination module. The voltage-loop output-result calculation module includes a voltage sampling calculation compensator and an output voltage loop compensator. The current-loop output-result calculation module includes a current sampling calculation compensator and an output current loop compensator. The minimum-value determination module is connected to the voltage-loop output-result calculation module and the current-loop output-result calculation module, respectively. The voltage-loop output-result calculation module is configured to, via the voltage sampling calculation compensator, calculate based on the output total voltage and a pre-stored output-voltage given value, a voltage error value obtained after compensation; and via the output voltage loop compensator, obtain a voltage loop output result based on the voltage error value. The current-loop output-result calculation module is configured to, via the current sampling calculation compensator, calculate based on the output total current and a pre-stored output-current given value, a current error value obtained after compensation; and via the output current loop compensator, obtain a current loop output result based on the current error value. The minimum-value determination module is configured to determine an output result with a smallest numerical value between the voltage loop output result and the current loop output result, and use the output result with the smallest numerical value as the loop output result, where the output result with the smallest numerical value is the voltage loop output result or the current loop output result.

In a possible embodiment, the modulation generator assembly includes a first modulation generator, a second modulation generator, a third modulation generator, a fourth modulation generator, and a wave-emitting duty cycle calculation module. The wave-emitting duty cycle calculation module is connected to the first modulation generator, the second modulation generator, the third modulation generator, and the fourth modulation generator, respectively. The first modulation generator is connected to the first switch transistor, the second modulation generator is connected to the second switch transistor, the third modulation generator is connected to the third switch transistor, and the fourth modulation generator is connected to the fourth switch transistor. The wave-emitting duty cycle calculation module is configured to subtract the balancing compensation result from the loop output result to obtain the first wave-emitting duty cycle; add the balancing compensation result to the loop output result to obtain the second wave-emitting duty cycle; multiply the first wave-emitting duty cycle by a ratio of the input total voltage to the output total voltage to obtain the third wave-emitting duty cycle; and multiply the second wave-emitting duty cycle by the ratio of the input total voltage to the output total voltage to obtain the fourth wave-emitting duty cycle. The first modulation generator is configured to transmit the transistor drive signal to the first switch transistor based on the first wave-emitting duty cycle. The second modulation generator is configured to transmit the transistor drive signal to the second switch transistor based on the second wave-emitting duty cycle. The third modulation generator is configured to transmit the transistor drive signal to the third switch transistor based on the third wave-emitting duty cycle. The fourth modulation generator is configured to transmit the transistor drive signal to the fourth switch transistor based on the fourth wave-emitting duty cycle.

In a possible embodiment, when a voltage across two ends of the input voltage is greater than a voltage across two ends of the output voltage, the circuit operates as a buck circuit. When the voltage across two ends of the input voltage is less than the voltage across two ends of the output voltage, the circuit operates as a boost circuit.

In a possible embodiment, a polarity of the input voltage is opposite to a polarity of the output voltage.

In a second aspect, an embodiment of the disclosure provides an electronic device including the bidirectional non-isolated DC-DC topology control circuit of the first aspect.

It may be seen that, the bidirectional non-isolated DC-DC topology control circuit provided in embodiments of the disclosure is capable of solving multiple problems existed in the current non-isolated DC-DC topology circuits. Specifically, the bidirectional non-isolated DC-DC topology control circuit provided in embodiments of the disclosure achieves both boost and buck functions while ensuring balanced voltage stress across switch components. By designing a capacitor midpoint connection between input and output, circulating current in multi-module parallel configurations may be effectively solved. Furthermore, based on the bidirectional non-isolated DC-DC topology control circuit provided in embodiments of the disclosure, stable control of output voltage and output current is achieved through a closed-loop control design, and the voltage balancing design for outputting half-bus voltage is achieved.

BRIEF DESCRIPTION OF THE DRAWINGS

In order to describe technical solutions of embodiments of the disclosure more clearly, the following will give a brief introduction to the accompanying drawings used for describing the embodiments. Apparently, the accompanying drawings hereinafter described are some embodiments of the present disclosure. Based on these drawings, those of ordinary skill in the art can also obtain other drawings without creative effort.

FIG. 1a is a schematic diagram of a structure of a bidirectional buck/boost circuit provided in an embodiment of the disclosure.

FIG. 1b is a schematic diagram of a structure of a bidirectional buck-boost circuit provide in an embodiment of the disclosure.

FIG. 1c is a schematic diagram of a structure of a bidirectional three-level buck/boost circuit provide in an embodiment of the disclosure.

FIG. 1d is a schematic diagram of a structure of a bidirectional H-bridge buck-boost circuit provide in an embodiment of the disclosure.

FIG. 2 is a schematic diagram of a structure of a bidirectional non-isolated direct current to direct current (DC-DC) topology circuit provided in an embodiment of the disclosure.

FIG. 3 is an interleaved wave-emitting control sequence diagram of a bidirectional non-isolated DC-DC topology provided in an embodiment of the disclosure.

FIG. 4 is a synchronous wave-emitting control sequence diagram of a bidirectional non-isolated DC-DC topology provided in an embodiment of the disclosure.

FIG. 5 is a schematic diagram of a structure of a modified single-inductor topology circuit provided in an embodiment of the disclosure.

FIG, 6 is a schematic diagram of a bidirectional non-isolated DC-DC topology loop control model provided in an embodiment of the disclosure.

FIG. 7 is a schematic diagram of another bidirectional non-isolated DC-DC topology loop control model provided in an embodiment of the disclosure.

FIG. 8 is a schematic diagram of a structure of a bidirectional non-isolated DC-DC topology with multiple branches in interleaved parallel provided in an embodiment of the disclosure.

## DETAILED DESCRIPTION

In order to enable those of ordinary skill in the art to better understand the solution of the disclosure, the following will illustrate technical solutions of embodiments of the disclosure clearly and comprehensively, with reference to the accompanying drawings of embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

The terms such as "first" and "second" and the like in the specification, claims, and the accompanying drawings of the disclosure are used for distinguishing between different objects rather than describing a particular order. In addition, the terms "include", "comprise", or any other variant thereof, are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

Reference to "embodiment" herein means that a particular feature, structure, or characteristic described in conjunction with the embodiment or implementation may be included in at least one embodiment of the present disclosure. The presence of the term at each place in the specification does not necessarily refer to the same embodiment, nor does it refer to a separate or alternative embodiment that is mutually exclusive of other embodiments. It may be understood by those skilled in the art, both explicitly and implicitly, that the embodiments described herein may be combined with other embodiments.

In embodiments of the disclosure, "and/or" describes associated relationship of associated objects and represents that three relationships may exist. For example, A and/or B may represent the following three cases: A exists only, both A and B exist, and B exists only. A and B may be singular or plural.

In embodiments of the disclosure, the character "/" herein may indicate that the associated objects are in an "or" relationship. In addition, the character "/" may represent a division sign, i.e., perform a division operation. For example, A/B may represent A divided by B.

The term "at least one (item) of" or the like in embodiments of the disclosure refers to any combination of these items, including any combination of a single item or multiple items. It refers to one or more, and more refers to two or more than two. For example, at least one (item) of a, b, or c can represent the following seven cases: a; b; c; a and b; a and c; b and c; a, b, and c. a, b, and c each may be an element or a set including one or more elements.

The term "equal to" in embodiments of the disclosure can be used in conjunction with "greater than" and applicable to the technical solution used in the case of "greater than"; or can be used in conjunction with "less than" and applicable to the technical solution used in the case of "less than". When "equal to" is used in conjunction with "greater than", "equal to" is not in conjunction with "less than". When "equal to" is used in conjunction with "less than", "equal to" is not in conjunction with "greater than".

In order to better understand the solutions in embodiments of the disclosure, the following will first introduce the terminal devices, related concepts, and background that may be involved in embodiments of the disclosure.

The terminal devices involved in embodiments of the disclosure may include various handheld devices with wireless communication functions, vehicle mounted devices, wearable devices, computing devices, or other processing devices connected to wireless modems, as well as various forms of user equipment (UE), mobile stations (MS), terminal devices, and so on. For ease of description, the devices mentioned above are collectively referred to as terminal devices.

Currently, with the vigorous development of the new energy industry and novel batteries, the form of electrical energy conversion has gradually evolved from traditional unidirectional flow to bidirectional flow, thereby promoting increasingly diverse application scenarios for new electrical energy. Compared with bidirectional isolated direct current to direct current (DC-DC) power supplies, bidirectional non-isolated DC-DC power supplies exhibit higher conversion efficiency and lower design costs. However, among numerous non-isolated DC-DC power supply topologies, one or multiple of the following issues persist as follows. 1, a boost/buck direction between input voltage and output voltage is fixed; 2, a direct conductive path exists between the positive and negative terminals of an input end and the positive and negative terminals of an output end, resulting in circulating currents that cannot be suppressed in a topology when multiple modules are connected in parallel; 3, voltage stress on individual components is high, making them unsuitable for high-voltage input/output designs.

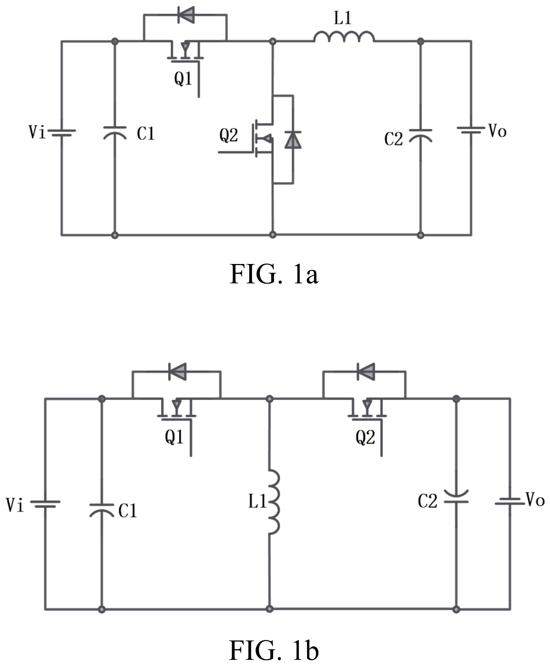

Currently in practical circuit applications, there are various non-isolated DC-DC power supply topology circuits. For example, reference is made to FIG. 1a, which is a schematic diagram of a structure of a bidirectional buck/boost circuit provided in an embodiment of the disclosure. The term "buck" indicates a step-down circuit type, while "boost" indicates a step-up circuit type. As illustrated in FIG. 1a, this topology is obtained by replacing diodes in a conventional buck circuit with controlled switch MOS transistors Q1 and Q2, where MOS is the abbreviation for MOSFET (metal-oxide-semiconductor field-effect transistor). In FIG. 1a, Vi is the input voltage, Vo is the output voltage, and Vi and Vo have the same positive/negative terminal orientations. C1 and C2 are capacitors, and L1 is an inductor. Although this bidirectional non-isolated topology is simple in structure, the drawback of this topology structure lies in the fixed boost/buck direction (either Vi to be bucked to Vo or Vo to be boosted to Vi). Additionally, the direct connection between the negative terminals of Vi and Vo leads to uncontrollable circulating currents of this topology structure in multi-module parallel systems.

In order to address the problem of fixed boost/buck direction, there is another commonly used bidirectional buck-boost circuit. Reference is made to FIG. 1b, which is a schematic diagram of a structure of a bidirectional buck-boost circuit provide in an embodiment of the disclosure. This circuit evolves from a conventional buck-boost circuit by replacing diodes in the conventional buck-boost circuit with controlled switch MOS transistors (Q1 and Q2 in FIG. 1b), and becomes a bidirectional buck-boost circuit enabling bidirectional energy flow. In FIG. 1b, C1 is an input capacitor, C2 is an output capacitor, L1 is an inductor, Vi is the input voltage, and Vo is the output voltage. Vi and Vo have opposite positive/negative terminal orientations. Compared with the circuit in FIG. 1a, the circuit in FIG. 1b solves the problem of fixed boost/buck direction, achieving both boost and buck functions. However, similar to the circuit in FIG. 1a, the direct connection between the negative terminal of Vi and the positive terminal of Vo causes uncontrollable circulating currents of this topology in multi-module parallel systems, while the high stress on the switch MOS transistors limits high-voltage input/output designs.

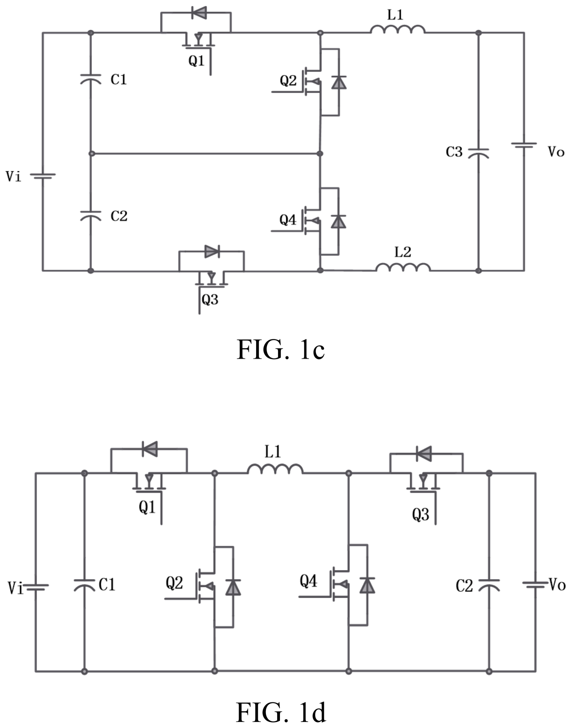

In order to solve the problem of excessive voltage stress on components in topology circuits, there is another commonly used bidirectional three-level buck/boost circuit. Reference is made to FIG. 1c, which is a schematic diagram of a structure of a bidirectional three-level buck/boost circuit provide in an embodiment of the disclosure. Vi is the input voltage, Vo is the output voltage, and Vi and Vo have the same positive/negative terminal orientations. C1, C2, C3 are capacitors, L1 and L2 are inductors, and this topology circuit includes four switch MOS transistors (Q1, Q2, Q3, Q4 in FIG. 1c). This circuit evolves from a conventional three-level buck/boost circuit by replacing diodes in the conventional three-level buck/boost circuit with controlled switch MOS transistors, and becomes a bidirectional three-level buck/boost circuit enabling bidirectional energy flow. The stress on components of this topology is the half-bus voltage stress of Vi, facilitating component selection. However, similar to the circuit in FIG. 1a, this topology can only achieve either Vi to be bucked to Vo or Vo to be boosted to Vi. Based on the circuit of FIG. 1c, there is another commonly used bidirectional H-bridge buck-boost circuit. Reference is made to FIG. 1d, which is a schematic diagram of a structure of a bidirectional H-bridge buck-boost circuit provide in an embodiment of the disclosure. As illustrated in FIG. 1d, Vi is the input voltage, Vo is the output voltage, and Vi and Vo have the same positive/negative terminal orientations. C1 and C2 are capacitors, L1 is an inductor, and this topology circuit includes four switch MOS transistors (Q1, Q2, Q3, Q4 in FIG. 1c). The voltage stress on switch components Q1 and Q2 is Vi, while the stress on switch components Q3 and Q4 is Vo, facilitating component selection. Although this topology achieves both boost and buck functions, it suffers from unequal voltage stress distribution across switches. Further, the direct connection between the negative terminal of Vi and the negative terminal of Vo causes uncontrollable circulating currents of this topology in multi-module parallel systems.

In order to address the aforementioned problems existing in various commonly used non-isolated DC-DC topology circuits in the practical circuit applications, embodiments of the disclosure provide a bidirectional non-isolated DC-DC topology control circuit. This topology control circuit includes a bidirectional non-isolated DC-DC topology circuit capable of solving the aforementioned circuit problems. Specifically, the topology circuit achieves both boost and buck functions while ensuring balanced voltage stress across switch components in the circuit. By designing a capacitor midpoint connection between input and output in the circuit, circulating current in multi-module parallel configurations may be avoided. Furthermore, a control method is designed for this topology circuit. Through phase-shifted wave-emitting, multiple branches in interleaved parallel may be achieved, thereby significantly reducing input/output current ripple. Through synchronized wave-emitting control, stable control of output voltage and output current is achieved, and the voltage balancing design for outputting half-bus voltage is achieved.

The technical solutions in embodiments of the disclosure will be described clearly and comprehensively below in conjunction with the accompanying drawings related to the bidirectional non-isolated DC-DC topology control circuit provided in embodiments of the disclosure.

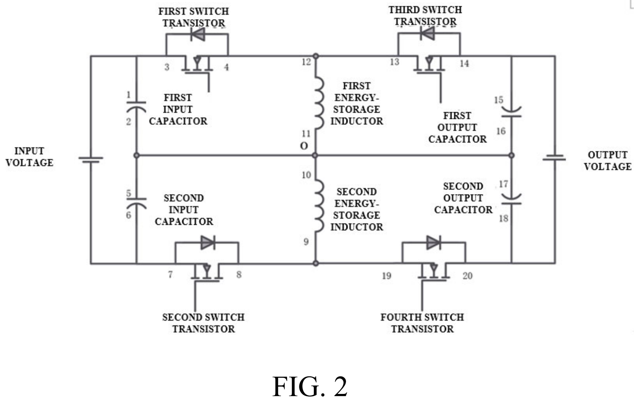

Reference is made to FIG. 2, which is a schematic diagram of a structure of a bidirectional non-isolated DC-DC topology circuit provided in an embodiment of the disclosure. The bidirectional non-isolated DC-DC topology circuit is a topology circuit included in the bidirectional non-isolated DC-DC topology control circuit. As illustrated in FIG. 2, the bidirectional non-isolated DC-DC topology circuit includes: an input voltage, a first switch transistor, a second switch transistor, a third switch transistor, a fourth switch transistor, a first input capacitor, a second input capacitor, a first output capacitor, a second output capacitor, a first energy-storage inductor, a second energy-storage inductor, and an output voltage. A positive terminal of the input voltage is connected to a first terminal of the first input capacitor and a third terminal of the first switch transistor, respectively. A second terminal of the first input capacitor is connected to a fifth terminal of the second input capacitor. A sixth terminal of the second input capacitor is connected to a negative terminal of the input voltage and a seventh terminal of the second switch transistor, respectively. An eighth terminal of the second switch transistor is connected to a ninth terminal of the second energy-storage inductor and a nineteenth terminal of the fourth switch transistor, respectively. A tenth terminal of the second energy-storage inductor is connected to an eleventh terminal of the first energy-storage inductor. A twelfth terminal of the first energy-storage inductor is connected to a fourth terminal of the first switch transistor and a thirteenth terminal of the third switch transistor, respectively. A fourteenth terminal of the third switch transistor is connected to a fifteenth terminal of the first output capacitor and a negative terminal of the output voltage, respectively. A sixteenth terminal of the first output capacitor is connected to a seventeenth terminal of the second output capacitor. An eighteenth terminal of the second output capacitor is connected to a twentieth terminal of the fourth switch transistor and a positive terminal of the output voltage, respectively. The second terminal of the first input capacitor and the fifth terminal of the second input capacitor are respectively connected to the sixteenth terminal of the first output capacitor and the seventeenth terminal of the second output capacitor, and are connected to the eleventh terminal of the first energy-storage inductor and the tenth terminal of the second energy-storage inductor to form a node O.

It may be specifically noted that, FIG. 2 contains multiple numbers. To facilitate understanding and description of connection relationships between components in the circuit structure, each number in FIG. 2 corresponds to a specific terminal in the connection relationship description of the bidirectional non-isolated DC-DC topology circuit provided in embodiments of the disclosure. For example, the number "1" in FIG. 2 corresponds to the first terminal of the first input capacitor, the number "2" in FIG. 2 corresponds to the second terminal of the first input capacitor, and so on. There are 20 numbers in FIG. 2 collectively represent 20 terminals in the bidirectional non-isolated DC-DC topology circuit.

First, it is necessary to explain DC-DC circuits, i.e., direct current to direct current circuits, this kind of circuits are categorized into boost power supply circuits and buck power supply circuits based on voltage-level conversion relationships, and are categorized into isolated power supply circuits and non-isolated power supply circuits based on input-output relationships. The circuit provided in the disclosure is the non-isolated DC-DC power supply circuit. The non-isolated power supply circuit refers to a configuration where the input terminal and the load terminal are directly connected without electrical isolation through a transformer, with the input terminal and the load terminal connected to a common ground, and the advantages include lower cost, simplicity, and superior performance indicator.

The first switch transistor, the second switch transistor, the third switch transistor, and the fourth switch transistor are all switch MOS (metal-oxide semiconductor) transistors, which generally function as electronic switches in circuits. The first energy-storage inductor and the second energy-storage inductor are energy-storage components that store energy in magnetic fields. The stored electrical energy is proportional to both the inductance and the square of the current flowing through the inductor itself. The energy-storage process in inductors is a process where current increases from zero to a steady-state maximum. One characteristic of inductors is that current flowing through the inductors cannot change abruptly. Therefore, when switch transistors are turned on or off and current in an inductor is interrupted, the inductor generates a reverse electromotive force (EMF) to maintain flowing of the current, thereby supplying power to a load and charging an output capacitor in a newly formed loop to stabilize the output voltage. In practical situations, the output capacitor primarily supplies continuous power to the load. Additionally, as known from the working principle of inductors, the output voltage fluctuates around a set value.

MOS transistors may be manufactured as enhancement-mode MOS transistors or depletion-mode MOS transistors, and may be manufactured as p-channel MOS transistors or n-channel MOS transistors. Therefore, there are totally four types of MOS transistors. However, in practical applications, enhancement-mode n-channel MOS transistors and enhancement-mode p-channel MOS transistors are commonly used. Their distinction lies in driving methods. For a p-channel MOS transistor, the source is connected to input and the drain is connected to output, while an n-channel transistor operates inversely. The n-channel MOS transistors are more widely applied due to their lower on-resistance and easier manufacturing. Lower on-resistance leads to lower energy dissipation on the on-resistance when a transistor is turned-on, that is, lower conduction loss. Notably, the characteristic of the n-channel MOS transistors is that the n-channel MOS transistors will be turned-on when the gate-to-source voltage (Vgs) exceeds a specific threshold. The embodiments of the disclosure primarily utilize NMOS to describe the circuit and solutions provided in the disclosure.

In a possible embodiment, the bidirectional non-isolated DC-DC topology control circuit further includes a drive control module. The drive control module is coupled and connected to the first switch transistor, the second switch transistor, the third switch transistor, and the fourth switch transistor, and the drive control module is configured to transmit a switch-transistor drive signal to control on or off of the first switch transistor, the second switch transistor, the third switch transistor, and the fourth switch transistor.

The drive control module may be designed to include four drive circuits, and the four drive circuits are configured to drive the first switch transistor, the second switch transistor, the third switch transistor, and the fourth switch transistor respectively. Each drive circuit is connected to one switch transistor, and the switch transistors connected to each drive circuit are different from each other. The drive circuits may be designed as conventional configurations, such as power integrated circuit (IC) direct drive, push-pull drive, fast turn-off drive, isolated drive, which is not limited herein.

The drive control module controls the on or off of the switch transistors by periodically transmitting a transistor drive signal to each transistor, thereby controlling current flow direction in the circuit to achieve boost or buck operations.

When a transistor drive signal is sent to a switch transistor, the gate voltage of the switch MOS transistor rises to the voltage corresponding to the switch-transistor drive signal. In this case, the Vgs is greater than the voltage required for turning on the transistor (Vgs(th)), the transistor is turned on. When the output voltage corresponding to the transistor drive signal is less than the Vgs(th), the transistor is turned off.

It may be seen that, the on or off of the four switch transistors in the DC-DC topology circuit may be controlled by arranging the drive control module in the bidirectional non-isolated DC-DC topology control circuit. Current flow direction in the circuit is controlled by controlling the switch transistors, which ensures the capability of this topology circuit to perform boost or buck operation.

In a possible embodiment, a control mode of the drive control module includes an interleaved wave-emitting control mode. The switch-transistor drive signal includes a first switch-transistor drive signal and a second switch-transistor drive signal. Under the interleaved wave-emitting control mode, in terms of transmitting the switch-transistor drive signal to control on or off of the first switch transistor, the second switch transistor, the third switch transistor, and the fourth switch transistor, the drive control module is configured to transmit the first switch-transistor drive signal to control on or off of the first switch transistor and the third switch transistor; and transmit the second switch-transistor drive signal to control on or off of the second switch transistor and the fourth switch transistor.

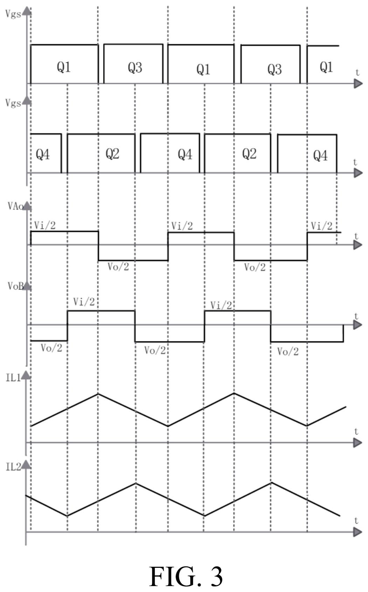

Reference is made to FIG. 3, which is an interleaved wave-emitting control sequence diagram of a bidirectional non-isolated DC-DC topology provided in an embodiment of the disclosure. As illustrated in FIG.3, Vgs represents the drive voltage level of the switch transistors, where Q1, Q2, Q3, and Q4 correspond to the first switch transistor, the second switch transistor, the third switch transistor, and the fourth switch transistor, respectively. VAo represents the voltage level across an inductor L1, VoB represents the voltage level across an inductor L2, while IL1 and IL2 represent current waveforms of the inductor L1 and the inductor L2. The drive control module controls the on or off of primary power switch transistors Q1 and Q2 through interleaved control and controls the on or off of primary power switch transistors Q3 and Q4 through interleaved control through interleaved control. When the value of the Vgs of a switch transistor is greater than the threshold, the switch transistor is turned on. The cycle illustrated in FIG. 3 is one of the situations in practical applications. It demonstrates that by transmitting transistor drive signals to Q1 and Q2 in an interleaved manner and transmitting transistor drive signals to Q3/Q4 in an interleaved manner, a voltage VAB superimposed on two inductors has three voltage levels, which are (Vi-Vo)/2, Vi, and Vo. A voltage superimposed on the inductor L1 and a voltage superimposed on the inductor L2 are Vi/2 and Vo/2, respectively, ensuring that current ripples of both inductors are basically the same. Since the current waveforms of IL1 and IL2 on the inductors are interleaved, ripples are substantially reduced in input total current and output total current.

As illustrated in FIG. 3, when Q1 and Q4 are turned on, the current flow direction in the input end of the circuit is from the positive terminal of the input voltage to C1 and C2 to supply power to the input capacitors, and from the positive terminal of the input voltage to Q1, then to L1 to increase the inductor current. Subsequently, the current of the first input capacitor and the current of L1 flow to the second input capacitor to return to the negative terminal of the input voltage. Therefore, when Q1 is turned on, the voltage VAo across L1 remains at Vi/2. Meanwhile, the current flow direction in the output end of the circuit is from the second energy-storage inductor, the first output capacitor, and the second output capacitor, to the positive terminal of the output voltage through the fourth switch transistor, and then back to the output capacitors and energy-storage inductors through the negative terminal of the output voltage. Since the second energy-storage inductor also supplies power to the output voltage load, it may be seen that the inductor current of the second energy-storage inductor gradually decreases when Q4 is turned on. When Q1 and Q2 are turned on, the input voltage begins to discharge current. The current flows to the input capacitors to charge and to L1 and L2 to supply energy. Consequently, when Q1 is turned on, IL1 gradually increases. When Q2 is turned on, IL2 also increases gradually, and VoB (i.e., the voltage across the second energy-storage inductor) becomes Vi/2. When Q1 is turned off and Q3 is turned on, L1 starts to supply power to the output voltage load, causing VAo to change to Vo/2, and IL1 gradually decreases.

The interleaved wave-emitting control mode is implemented by controlling the sequential timing of the drive control module transmitting the first switch-transistor drive signal and the second switch-transistor drive signal. It is to be noted that, the turn-on durations of Q1/Q2 and Q2/Q4 relate to the ratio of the values of Vi and Vo, and different controls are required based on specific conditions.

It may be seen that, the drive control module adopts the interleaved control method, which significantly reduces ripples of the input total current and the output total current in the circuit, thereby greatly decreasing the ripple of the input voltage and the output voltage. Consequently, the efficiency of the power supply in the topology circuit is enhanced, the safety of circuit components is improved, and the generation of harmonic wave is reduced.

In a possible embodiment, a control mode of the drive control module includes a synchronous wave-emitting control mode. Under the synchronous wave-emitting control mode, in terms of transmitting the switch-transistor drive signal to control on or off of the first switch transistor, the second switch transistor, the third switch transistor, and the fourth switch transistor, the drive control module is configured to transmit the switch-transistor drive signal to control synchronous on or off of the first switch transistor and the second switch transistor, and control synchronous on or off of the third switch transistor and the fourth switch transistor.

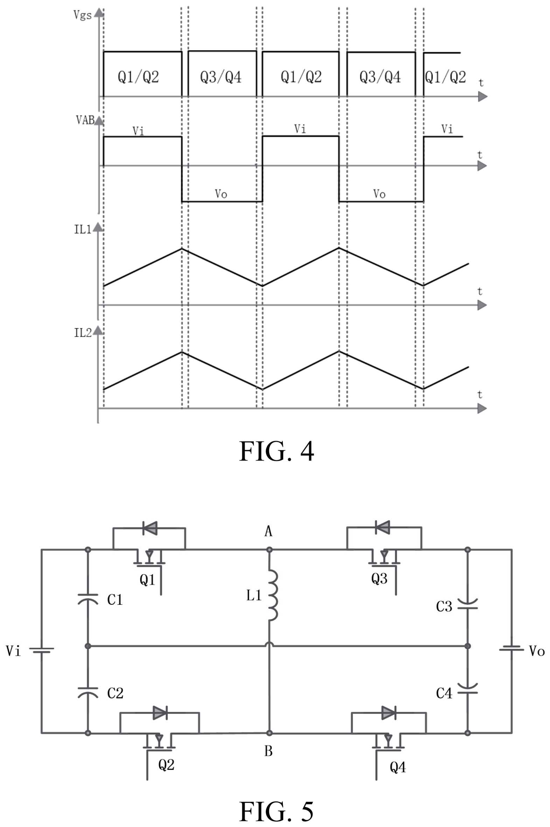

As illustrated in FIG. 4, which is a synchronous wave-emitting control sequence diagram of a bidirectional non-isolated DC-DC topology provided in an embodiment of the disclosure. As illustrated in FIG. 4, Vgs represents the drive voltage level corresponding to the switch transistors, Q1, Q2, Q3, and Q4 respectively indicate the corresponding first switch transistor, second switch transistor, third switch transistor, and fourth switch transistor. VAo represents the voltage level across an inductor L1, VoB represents the voltage level across an inductor L2, IL1 is the current waveform of the inductor L1, and IL2 is the current waveform of the inductor L2. It may be seen that, the transistor drive signals sent by the drive control module to Q1 and Q2 are synchronized, and the transistor drive signals sent by the drive control module to Q3 and Q4 are synchronized. That is, Q1 and Q2 are synchronously turned on or off, and Q3 and Q4 are synchronously turned on or off. Through this control mode, the superimposed voltage VAB across the inductor L1 and the inductor L2 includes the input voltage Vi and the output voltage -Vo. The voltage superimposed on the inductor L1 and the voltage superimposed on the inductor L2 are respectively Vi/2 and -Vo/2. The current waveforms of both inductors L1 and L2 are completely synchronized, enabling equalization between the current of the inductor L1 and the current of the inductor L2.

The current flow direction of the bidirectional non-isolated DC-DC topology circuit changes according to the on or off of the four switch transistors in the topology circuit. Taking the synchronous wave-emitting control mode of the drive control module as an example, when the first switch transistor and the second switch transistor are turned on, and the third switch transistor and the fourth switch transistor are turned off, the current flow direction in the circuit is as follows. Current flows from the positive terminal of the input voltage to the first terminal of the first input capacitor and the third terminal of the first switch transistor. After flowing to the first terminal of the first input capacitor to charge the first input capacitor, current flows from the second terminal of the first input capacitor to the fifth terminal of the input capacitor to charge the second input capacitor, then returns to the negative terminal of the input voltage from the sixth terminal of the second input capacitor. Additionally, the current from the input voltage and input capacitors to the first switch transistor flows from the fourth terminal of the first switch transistor to supply power to the first energy-storage inductor and the second energy-storage inductor (primarily powered by the input capacitors). Since the current of the energy-storage inductors cannot change abruptly, the inductor current gradually increases. Subsequently, the current flows back to the negative terminal of the input voltage from the ninth terminal of the second energy-storage inductor through the second switch transistor. Meanwhile, the first input capacitor and the second input capacitor on the right side of the circuit supply power to the output voltage to maintain the voltage across two ends. When the first switch transistor and the second switch transistor are turned off, and the third switch transistor and the fourth switch transistor are turned on, the input voltage continues to supply power to the first input capacitor and the second input capacitor on the left side of the circuit (i.e., the input end). While on the right side of the circuit (i.e., the output end), since the circuit of the inductors cannot change abruptly, the inductors supply power to the second output capacitor, the first output capacitor, and the load of the output voltage through the fourth switch transistor. After the circuit system stabilizes, the inductor volt-second balance is maintained. When the first switch transistor and the second switch transistor are turned on, the sum of the voltages of the inductors is equal to the total voltage on the input end. When the third switch transistor and the fourth switch transistor are turned on, the sum of the voltages of the inductors is equal to the total voltage on the output end. The voltage stresses of the four switch transistors are also balanced. Furthermore, since the input end and the output end of this topology circuit are not directly connected via a direct conductive path between their positive and negative terminals but instead through the connection point between the first input capacitor and the second output capacitor and the connection point between the third output capacitor and the fourth output capacitor, uncontrollable circulating currents are prevented when multiple modules of the topology circuit are connected in parallel.

It may be seen that, by adopting the synchronous wave-emitting control mode, the drive control module ensures that the current waveforms of the two energy-storage inductors in the topology circuit are completely synchronized, thereby enabling equalization between the currents of the two energy-storage inductors. Moreover, the uniform distribution of current stress across each component in the circuit is improved, facilitating component selection and improving the uniform distribution of thermal stress across components in the circuit.

In a possible embodiment, under the synchronous wave-emitting control mode of the drive control module, the first energy-storage inductor L1 and the second energy-storage inductor L2 of the bidirectional non-isolated DC-DC topology circuit are integrated into a single energy-storage inductor L1, and the node O in FIG. 2 is not connected to the midpoints of the input/output buses, a single-inductor bidirectional non-isolated topology circuit may be obtained.

Reference is made to FIG. 5, which is a schematic diagram of a structure of a modified single-inductor topology circuit provided in an embodiment of the disclosure. As illustrated in FIG. 5, the two energy-storage inductors in the topology circuit illustrated in FIG. 2 is integrated into a single inductor, and the wire where the inductor is located is not connected to the midpoints of the input/output buses. This single-inductor modified topology can only adopt synchronous wave-emitting control.

It may be seen that, the circuit design is modified so that the topology circuit can address existing issues in conventional bidirectional non-isolated DC-DC topology circuits while achieving simplified control of multiple switch-transistor devices, thereby improving reliability of the topology circuit and facilitating manufacturing and integration.

In a possible embodiment, the bidirectional non-isolated DC-DC topology control circuit further includes an input-voltage sampling module, an output-voltage sampling module, an output-current sampling module, an output-voltage balancing compensation module, a modulation generator assembly, and a loop compensation calculation assembly. The input-voltage sampling module is coupled in parallel with the first input capacitor and the second input capacitor. The output-voltage sampling module is coupled in parallel with the first output capacitor and the second output capacitor. The input-voltage sampling module is connected to the modulation generator assembly. The output-voltage sampling module is connected to the loop compensation calculation assembly and the output-voltage balancing compensation module, respectively. The output-current sampling module is coupled in series with the output voltage. The output-current sampling module is connected to the loop compensation calculation assembly. The modulation generator assembly is connected to the output-voltage balancing compensation module, the loop compensation calculation assembly, the first switch transistor, the second switch transistor, the third switch transistor, and the fourth switch transistor, respectively. The input-voltage sampling module is configured to sample a first-input-capacitor voltage of the first input capacitor and a second-input-capacitor voltage of the second input capacitor, and determine an input total voltage based on the first-input-capacitor voltage and the second-input-capacitor voltage. The output-voltage sampling module is configured to sample a first-output-capacitor voltage of the first output capacitor and a second-output-capacitor voltage of the second output capacitor, and determine an output total voltage and an output voltage difference based on the first-output-capacitor voltage and the second-output-capacitor voltage. The output-current sampling module is configured to sample an output total current corresponding to the output voltage. The output-voltage balancing compensation module is configured to, based on the output voltage difference determined by the output-voltage sampling module, multiply the output voltage difference and a pre-stored output-voltage balancing compensation coefficient to obtain a balancing compensation result. The loop compensation calculation assembly is configured to obtain a loop output result based on the output total voltage determined by the output-voltage sampling module and the output total current sampled by the output-current sampling module. The modulation generator assembly is configured to determine a wave-emitting duty cycle corresponding to each switch transistor based on the loop output result determined by the loop compensation calculation assembly, the balancing compensation result determined by the output-voltage balancing compensation module, the input total voltage determined by the input-voltage sampling module, and the output total voltage determined by the output-voltage sampling module. The modulation generator assembly is further configured to transmit a transistor drive signal to each switch transistor based on the first wave-emitting duty cycle, the second wave-emitting duty cycle, the third wave-emitting duty cycle, and the fourth wave-emitting duty cycle to control on or off of a corresponding switch transistor.

The wave-emitting duty cycle corresponding to each switch transistor includes a first wave-emitting duty cycle corresponding to the first switch transistor, a second wave-emitting duty cycle corresponding to the second switch transistor, a third wave-emitting duty cycle corresponding to the third switch transistor, and a fourth wave-emitting duty cycle corresponding to the fourth switch transistor.

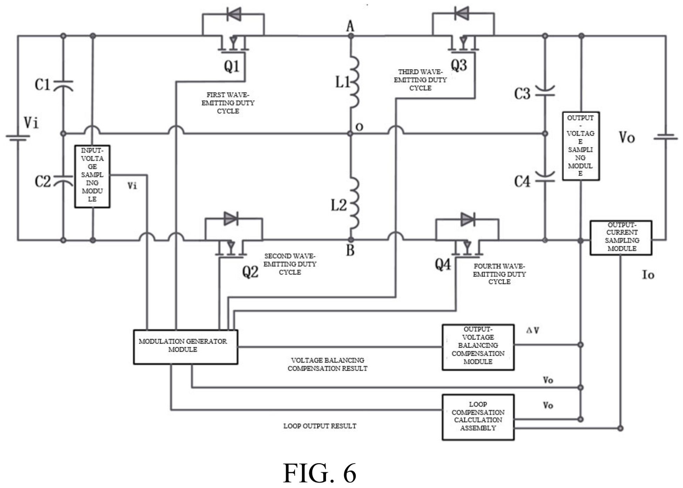

Reference is made to FIG. 6, which is a schematic diagram of a bidirectional non-isolated DC-DC topology loop control model provided in an embodiment of the disclosure. As illustrated in FIG. 6, this embodiment corresponds to the scenario of the bidirectional non-isolated DC-DC topology circuit in the synchronous wave-emitting control implementation under forward power flow condition. In FIG. 6, Vi represents the input voltage, Vo represents the output voltage, C1 represents the first input capacitor, C2 represents the second input capacitor, C3 represents the first output capacitor, and C4 represents the second output capacitor. L1 represents the first energy-storage inductor, L2 represents the second energy-storage inductor, and Q1, Q2, Q3, Q4 correspond to the first switch transistor, the second switch transistor, the third switch transistor, and the fourth switch transistor, respectively. It may be seen that, the input-voltage sampling module is connected in parallel with C1 and C2 to sample the voltage Vc1 of the first input capacitor C1 and the voltage Vc2 of the second input capacitor C2, the output-voltage sampling module is connected in parallel with C3 and C4 to sample the voltage Vc3 of the first output capacitor C3 and the voltage Vc4 of the second output capacitor C4, and the output-current sampling module is connected in series with the circuit of the output voltage Vo to sample the output total current Io.

As illustrated in FIG. 6, the specific steps of the synchronous wave-emitting control implementation during forward power flow are described below. Step 1: the input-voltage sampling module first collects the voltage values of Vc1 and Vc2, calculates the input voltage value Vi through Vc1 + Vc2 = Vi, and then sends Vi to the modulation generator assembly. Similarly, after collecting Vc3 and Vc4, the output-voltage sampling module calculates the output voltage value Vo through Vc3 + Vc4 = Vo, as well as calculates $\Delta V$, where $\Delta V$ is the voltage difference between Vc3 and Vc4, and $\Delta V$ is used to balance the two half-bus output voltages. $\Delta V$ is sent to the output-voltage balancing compensation module, and Vo is sent to the loop compensation calculation assembly. Step 2: the output-voltage balancing compensation module obtains, based on $\Delta V$ and a preset adjustment coefficient Ki (also called the output-voltage balancing compensation coefficient), a voltage balancing adjustment value Kb, i.e., the voltage balancing compensation result. Additionally, the loop compensation calculation assembly calculates the loop output result based on Vo and Io. Step 3: the modulation generator assembly obtains the wave-emitting duty cycle corresponding to each switch transistor based on the voltage balancing compensation result, the loop output result, Vo, and Vi. The modulation generator assembly then sends a transistor drive signal to each switch transistor according to the wave-emitting duty cycle, i.e., adjusts the drive waveform of the transistor drive signals corresponding to each switch transistor, thereby modifying the voltage. A higher duty cycle results in a higher average output voltage. As long as the pulse frequency is sufficiently high, controlling the duty cycle can output any voltage waveform with an amplitude between 0 and the maximum value, thereby achieving forward closed-loop wave-emitting control of the bidirectional non-isolated topology.

It may be seen that, the closed-loop control of the topology circuit of the embodiment enables stable control of the output voltage and the output current. Furthermore, by sampling half-bus voltages of output electrolytic capacitors to obtain the voltage balancing adjustment value, the wave-emitting duty cycle of each switch transistor may be obtained, thereby realizing the voltage balancing design for outputting half-bus voltage.

In a possible embodiment, the loop compensation calculation assembly includes a voltage-loop output-result calculation module, a current-loop output-result calculation module, and a minimum-value determination module. The voltage-loop output-result calculation module includes a voltage sampling calculation compensator and an output voltage loop compensator. The current-loop output-result calculation module includes a current sampling calculation compensator and an output current loop compensator. The minimum-value determination module is connected to the voltage-loop output-result calculation module and the current-loop output-result calculation module, respectively. The voltage-loop output-result calculation module is configured to, via the voltage sampling calculation compensator, calculate based on the output total voltage and a pre-stored output-voltage given value, a voltage error value obtained after compensation; and via the output voltage loop compensator, obtain a voltage loop output result based on the voltage error value. The current-loop output-result calculation module is configured to, via the current sampling calculation compensator, calculate based on the output total current and a pre-stored output-current given value, a current error value obtained after compensation; and via the output current loop compensator, obtain a current loop output result based on the current error value. The minimum-value determination module is configured to determine an output result with a smallest numerical value between the voltage loop output result and the current loop output result, and use the output result with the smallest numerical value as the loop output result, where the output result with the smallest numerical value is the voltage loop output result or the current loop output result.

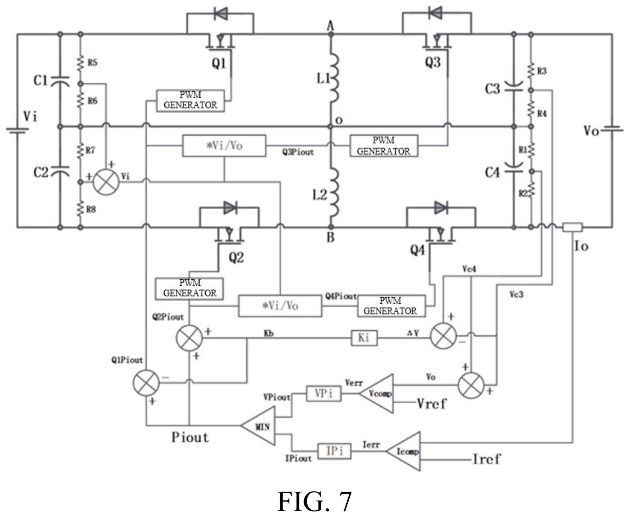

Reference is made to FIG. 7, which is a schematic diagram of another bidirectional non-isolated DC-DC topology loop control model provided in an embodiment of the disclosure. As illustrated in FIG. 7, FIG. 7 explicitly details the specific components within the modules of the topology loop control model shown in FIG. 6. The input-voltage sampling module includes input sampling voltage-division resistors R5, R6, R7, R8, and an adder circuit. The voltage-division resistors R5 and R6 are configured to sample the input half-bus voltage Vc1 corresponding to the first input capacitor, the voltage-division resistors R7 and R8 are configured to sample the input half-bus voltage Vc1 corresponding to the second input capacitor, and then the input total voltage Vi is obtained through the adder circuit. The output-voltage sampling module includes output sampling voltage-division resistors R1, R2, R3, R4, and an adder-subtractor circuit. The voltage-division resistors R3 and R4 are configured to sample the output half-bus voltage Vc3 corresponding to the first output capacitor, the voltage-division resistors R1 and R2 are configured to sample the input half-bus voltage Vc4 corresponding to the second output capacitor, and then the output total voltage Vo and the output voltage difference $\Delta$V are obtained through the adder-subtractor circuit. The output-current sampling module includes an output-current sampling resistor R9 connected in series with the output voltage which is configured to obtain the output total current Io. The loop compensation calculation assembly includes the voltage-loop output-result calculation module, the current-loop output-result calculation module, and the minimum-value determination module MIN. The voltage-loop output-result calculation module includes the voltage sampling calculation compensator Vcomp and the output voltage loop compensator VPi. The current-loop output-result calculation module includes the current sampling calculation compensator Icomp and the output current loop compensator IPi. The minimum-value determination module is connected to the voltage-loop output-result calculation module and the current-loop output-result calculation module, respectively.

The output current loop compensator and the output voltage loop compensator may be PI compensators, where P represents proportional term and I represents integral term. In FIG. 7, Verr represents the error value (voltage error value), which is obtained after calculation and compensation based on the output-voltage sampled value Vo and the output-voltage given value Vref. Ierr represents the error value (current error value), which is obtained after calculation and compensation based on the output-current sampled value Io and the output-current given value Iref. The output voltage loop compensator VPi may obtain the voltage-loop output result VPiout based on the voltage error value Verr, and the output current loop compensator IPi may obtain the current-loop output result IPiout based on the current error value Ierr. The minimum-value determination module ultimately determines the smaller value between the voltage-loop output result VPiout and the current-loop output result IPiout as the loop output result.

The minimum-value determination module is configured to determine the smaller value between the voltage-loop output result and the current-loop output result as the loop output result, and the process includes the following numerical comparison situations. When the voltage-loop output result is greater than the current-loop output result, the current-loop output result is determined as the loop output result. When the voltage-loop output result is smaller than the current-loop output result, the voltage-loop output result is determined as the loop output result. When the voltage-loop output result is equal to the current-loop output result, the current-loop output result or the current-loop output result is determined as the loop output result.

It may be seen that, with the specific modules and module functionality of the loop compensation calculation assembly in the topology loop control model provided in the embodiment, the error values for both the output voltage and the output current may be calculated through the voltage-loop output-result calculation module and the current-loop output-result calculation module. Then, the output result of the voltage loop and the output result of the current loop are calculated, and the loop output result is subsequently obtained. Therefore, the wave-emitting duty cycle of each switch transistor may be calculated, which is used to adjust the drive waveform of each switch transistor, thereby realizing the voltage balancing design for outputting half-bus voltage, significantly enhancing the efficiency and the stability of circuit control.

In a possible embodiment, the modulation generator assembly includes a first modulation generator, a second modulation generator, a third modulation generator, a fourth modulation generator, and a wave-emitting duty cycle calculation module. The wave-emitting duty cycle calculation module is connected to the first modulation generator, the second modulation generator, the third modulation generator, and the fourth modulation generator, respectively. The first modulation generator is connected to the first switch transistor, the second modulation generator is connected to the second switch transistor, the third modulation generator is connected to the third switch transistor, and the fourth modulation generator is connected to the fourth switch transistor. The wave-emitting duty cycle calculation module is configured to subtract the balancing compensation result from the loop output result to obtain the first wave-emitting duty cycle; add the balancing compensation result to the loop output result to obtain the second wave-emitting duty cycle; multiply the first wave-emitting duty cycle by a ratio of the input total voltage to the output total voltage to obtain the third wave-emitting duty cycle; and multiply the second wave-emitting duty cycle by the ratio of the input total voltage to the output total voltage to obtain the fourth wave-emitting duty cycle. The first modulation generator is configured to transmit the transistor drive signal to the first switch transistor based on the first wave-emitting duty cycle. The second modulation generator is configured to transmit the transistor drive signal to the second switch transistor based on the second wave-emitting duty cycle. The third modulation generator is configured to transmit the transistor drive signal to the third switch transistor based on the third wave-emitting duty cycle. The fourth modulation generator is configured to transmit the transistor drive signal to the fourth switch transistor based on the fourth wave-emitting duty cycle.

Reference is again made to FIG. 7, which is a schematic diagram of another bidirectional non-isolated DC-DC topology loop control model provided in an embodiment of the disclosure. The four modulation generators in the modulation generator assembly may be pulse width modulation (PWM) generators illustrated in the figure. The PWM generator connected to the first switch transistor Q1 is the first modulation generator, the PWM generator connected to the second switch transistor Q2 is the second modulation generator, the PWM generator connected to the third switch transistor Q3 is the third modulation generator, and the PWM generator connected to the fourth switch transistor Q4 is the fourth modulation generator. After the voltage balancing compensation result Kb and the loop output result Piout are calculated by the loop compensation calculation assembly and the output-voltage balancing compensation module as described in previous embodiments, the modulation generator assembly subtracts Piout from Kb to obtain the wave-emitting duty cycle Q1Piout of Q1, and adds Kb to Piout to obtain the wave-emitting duty cycle Q2Piout of Q2. Since Q3 and Q4 serve as freewheeling switch transistors for synchronous rectification when the topology circuit is under forward power flow condition, there is the following relationship between the drive wave-emitting duty cycle of Q3/Q4 and the duty cycle of Q1/Q2 (the voltage applied across two ends of the inductor satisfies the volt-second balance relationship in steady state, where T is the designed wave-emitting period value of the on-off period):

$$Q1Piout * T * Vi/2 = Q3Piout * T * Vo/2 \text{ , } Q2Piout * T * Vi/2 = Q4Piout * T * Vo/2$$

Further, the following is obtained:

$$Q3Piout = Q1Piout * Vi/Vo \text{ , } Q4Piout = Q2Piout * Vi/Vo$$

Therefore, by further obtaining the input total voltage Vi and the output total voltage Vo, the wave-emitting duty cycles corresponding to Q2 and Q4 may be obtained. Therefore, the duty cycle corresponding to each switch transistor may be obtained, namely Q1Piout, Q2Piout, Q3Piout, and Q4Piout. Finally, the duty cycle corresponding to each switch transistor is transmitted to the corresponding PWM generator, and the PWM generator adjusts the drive waveforms of the transistor drive signals according to the wave-emitting duty cycles to ensure that the turn-on and turn-off of the switch transistors comply with the corresponding wave-emitting duty cycles (the ratio of turn-on duration of a switch transistor to the duration of a signal period is the wave-emitting duty cycle), thereby achieving forward closed-loop wave-emitting control of the bidirectional non-isolated topology. Additionally, it may be noted that, since the forward and reverse structures of the topology are entirely symmetrical, reverse power flow may be achieved by the same closed-loop control structure in FIG. 7.

It may be seen that, during forward power flow in the topology circuit, the distinct functionalities of each switching tube determine the relationships among their pulse duty cycles. Based on data acquired or calculated by each module in the control model, the pulse duty cycles for each switching tube are derived. These duty cycles are then used to generate new driving waveforms tailored to each switching tube, thereby realizing forward closed-loop control of the bidirectional non-isolated topology and achieving the voltage balancing design function for the output half-bus voltage. This enhances the stability of the topology circuit and improves the efficiency of closed-loop control implementation.

In a possible embodiment, when a voltage across two ends of the input voltage is greater than a voltage across two ends of the output voltage, the circuit operates as a buck circuit. When the voltage across two ends of the input voltage is less than the voltage across two ends of the output voltage, the circuit operates as a boost circuit.

It may be seen that, based on the circuit structure of the bidirectional non-isolated DC-DC topology circuit provided in embodiments of the disclosure, bidirectional power flow may be achieved. The circuit can achieve both voltage boost conversion and voltage buck conversion, and ensure balanced voltage stress across all switch components in the topology circuit, thereby improving the comprehensiveness and stability of the circuit.

In a possible embodiment, the polarity of the input voltage is opposite to the polarity of the output voltage.

In the topology circuit provided in embodiments of the disclosure, the polarity of the input voltage is opposite to the polarity of the output voltage, which is the same as a regular buck-boost circuit.

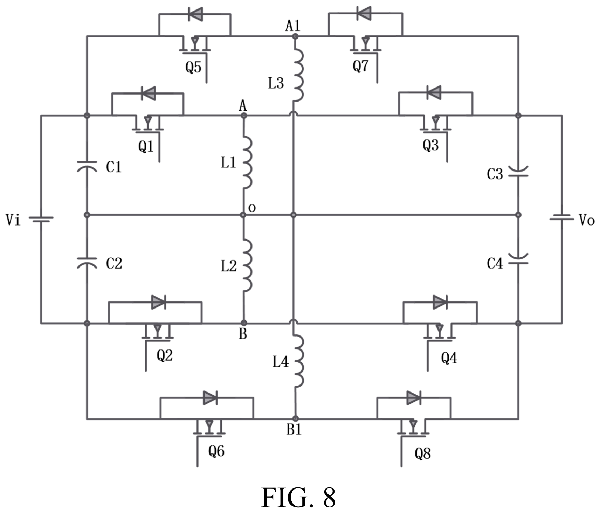

Based on the bidirectional non-isolated DC-DC topology circuit provided in embodiments of the disclosure, higher conversion power may be achieved by adopting a multi-branches interleaved parallel configuration to further increase the power conversion of the topology circuit. Reference is made to FIG. 8, which is a schematic diagram of a structure of a bidirectional non-isolated DC-DC topology with multiple branches in interleaved parallel provided in an embodiment of the disclosure. As illustrated in FIG. 8, the midpoint of the buses in the topology circuit of FIG. 2 is implemented as a common design node, and interleaved parallel control is implemented for the upper two branches of the circuit and similarly for the lower two branches of the circuit, thereby forming a four-branches interleaved parallel control design. Combined with rational phase-shift angle design, this configuration effectively reduces input voltage ripple and output voltage ripple.

Specifically, the interleaved parallel control of the upper two branches involves connecting the switch MOS transistor Q5 and switch MOS transistor Q7 of FIG. 8 in parallel, while the interleaved parallel control of the lower two branches involves connecting the switch MOS transistor Q6 and the switch MOS transistor Q8 of FIG. 8 in parallel. Subsequently, the third energy-storage inductor L3 and the fourth energy-storage inductor L4 are connected in series in the wire between node A1 (junction of Q5 and Q7) and node B1 (junction of Q6 and Q8). It may be noted that, similar to the wire between the first energy-storage inductor L1 and second energy-storage inductor L2, the wire between the third energy-storage inductor L3 and the fourth energy-storage inductor L4 also intersects with the wire connected to the four capacitors, so as to form a new node.

For the DC-DC topology circuit with multiple branches in interleaved parallel illustrated in FIG. 8, a single switch wave-emitting period represented by 180° is taken as an example, and in an n-branches interleaved phase design, the phase angle of each branch may be directly derived as 180°/n. Multi-branches interleaved parallel configuration not only reduces the input and output half-bus current ripples, significantly extending the lifetime of the electrolytic capacitors, but also significantly lowers the input and output voltage ripples, prominently improving the performance indicator of the topology.

It may be seen that, the bidirectional non-isolated DC-DC topology control circuit provided in embodiments of the disclosure includes the bidirectional non-isolated DC-DC topology circuit, two wave-emitting control modes of the drive control module, and the bidirectional non-isolated DC-DC closed-loop control model. The bidirectional non-isolated DC-DC topology control circuit in the bidirectional non-isolated DC-DC topology circuit provided in the disclosure can achieve boost and buck functions with wide input and output voltage range designs, ensure balanced voltage stress across the switch components, and eliminate input/output voltage level uncertainty by connection the input and output through capacitor midpoint connections. The drive control module enables multiple operating modes including synchronous wave-emitting control and interleaved wave-emitting control. Through phase-shifted wave-emitting, multiple branches in interleaved parallel may be achieved, thereby significantly reducing input and output current ripples. In multi-module input/output parallel connection, since the input and output of multiple modules are only connected through positive and negative terminals while the midpoint does not form a connection path, circulating currents in multi-module parallel configuration may be suppressed. Moreover, based on the bidirectional non-isolated DC-DC closed-loop control model, the voltage difference between two output half-buses may be incorporated into the closed-loop control to achieve controllable voltage balancing for the output electrolytic capacitors, enhancing the comprehensiveness and stability of the topology circuit while solving multiple issues existing in practical applications of the bidirectional non-isolated DC-DC topology circuits.

Consistent with the aforementioned embodiments, an electronic device is further provided in embodiments of the disclosure. The electronic device includes the bidirectional non-isolated DC-DC topology control circuit described in any of the aforementioned embodiments. The content and effects may be referred to the explanations in the aforementioned embodiments, which will not be repeated herein.

In the aforementioned embodiments, the descriptions of each embodiment emphasize different aspects. For parts not detailed in a particular embodiment, reference may be made to relevant descriptions in other embodiments.

In the several embodiments provided in the disclosure, it may be understood that the disclosed bidirectional non-isolated DC-DC topology control circuit may be implemented through other means. For example, the embodiments of the bidirectional non-isolated DC-DC topology control circuit described above are merely illustrative, and components in the circuit may also be replaced by other components with equivalent functions. Additionally, the couplings or direct couplings or communication connections shown or discussed between components may be implemented through indirect couplings or communication connections via interfaces, circuits, or components, which may be electrical or other forms.

Furthermore, the circuits in various embodiments of the disclosure may be integrated on a single circuit board, exist as separate physical entities, or have two or more circuits integrated on one circuit board.

The above embodiments of the disclosure are described in detail. Principles and implementation manners of the disclosure are elaborated with specific examples herein. The illustration of embodiments above is only used to help understanding of the disclosure and core ideas of the disclosure. At the same time, for those of ordinary skill in the art, according to ideas of the present disclosure, there will be changes in the specific implementation manners and application scopes. In conclusion, contents of this specification should not be interpreted as limitation on the present disclosure.

**Claims**

1. A bidirectional non-isolated direct current to direct current (DC-DC) topology control circuit, wherein the bidirectional non-isolated DC-DC topology control circuit comprises a bidirectional non-isolated DC-DC topology circuit, wherein the bidirectional non-isolated DC-DC topology circuit comprises: an input voltage, a first switch transistor, a second switch transistor, a third switch transistor, a fourth switch transistor, a first input capacitor, a second input capacitor, a first output capacitor, a second output capacitor, a first energy-storage inductor, a second energy-storage inductor, and an output voltage;

   a positive terminal of the input voltage is connected to a first terminal of the first input capacitor and a third terminal of the first switch transistor, respectively;
   a second terminal of the first input capacitor is connected to a fifth terminal of the second input capacitor;
   a sixth terminal of the second input capacitor is connected to a negative terminal of the input voltage and a seventh terminal of the second switch transistor, respectively;
   an eighth terminal of the second switch transistor is connected to a ninth terminal of the second energy-storage inductor and a nineteenth terminal of the fourth switch transistor, respectively;
   a tenth terminal of the second energy-storage inductor is connected to an eleventh terminal of the first energy-storage inductor; a twelfth terminal of the first energy-storage inductor is connected to a fourth terminal of the first switch transistor and a thirteenth terminal of the third switch transistor, respectively; a fourteenth terminal of the third switch transistor is connected to a fifteenth terminal of the first output capacitor and a negative terminal of the output voltage, respectively;
   a sixteenth terminal of the first output capacitor is connected to a seventeenth terminal of the second output capacitor;
   an eighteenth terminal of the second output capacitor is connected to a twentieth terminal of the fourth switch transistor and a positive terminal of the output voltage, respectively;
   the second terminal of the first input capacitor and the fifth terminal of the second input capacitor are respectively connected to the sixteenth terminal of the first output capacitor and the seventeenth terminal of the second output capacitor, and are connected to the eleventh terminal of the first energy-storage inductor and the tenth terminal of the second energy-storage inductor to form a node O.

2. The circuit of claim 1, wherein the bidirectional non-isolated DC-DC topology control circuit further comprises a drive control module;
   wherein the drive control module is coupled and connected to the first switch transistor, the second switch transistor, the third switch transistor, and the fourth switch transistor, and the drive control module is configured to transmit a switch-transistor drive signal to control on or off of the first switch transistor, the second switch transistor, the third switch transistor, and the fourth switch transistor.

3. The circuit of claim 2, wherein a control mode of the drive control module comprises an interleaved wave-emitting control mode, and the switch-transistor drive signal comprises a first switch-transistor drive signal and a second switch-transistor drive signal; under the interleaved wave-emitting control mode, wherein in terms of transmitting the switch-transistor drive signal to control on or off of the first switch transistor, the second switch transistor, the third switch transistor, and the fourth switch transistor, the drive control module is configured to:

transmit the first switch-transistor drive signal to control on or off of the first switch transistor and the third switch transistor; and
transmit the second switch-transistor drive signal to control on or off of the second switch transistor and the fourth switch transistor.

4. The circuit of claim 2, wherein a control mode of the drive control module comprises a synchronous wave-emitting control mode, and under the synchronous wave-emitting control mode, wherein in terms of transmitting the switch-transistor drive signal to control on or off of the first switch transistor, the second switch transistor, the third switch transistor, and the fourth switch transistor, the drive control module is configured to:
transmit the switch-transistor drive signal to control synchronous on or off of the first switch transistor and the second switch transistor, and control synchronous on or off of the third switch transistor and the fourth switch transistor.

5. The circuit of claim 1, wherein the bidirectional non-isolated DC-DC topology control circuit further comprises an input-voltage sampling module, an output-voltage sampling module, an output-current sampling module, an output-voltage balancing compensation module, a modulation generator assembly, and a loop compensation calculation assembly; wherein the input-voltage sampling module is coupled in parallel with the first input capacitor and the second input capacitor, the output-voltage sampling module is coupled in parallel with the first output capacitor and the second output capacitor, the input-voltage sampling module is connected to the modulation generator assembly, the output-voltage sampling module is connected to the loop compensation calculation assembly and the output-voltage balancing compensation module, respectively, the output-current sampling module is coupled in series with the output voltage, the output-current sampling module is connected to the loop compensation calculation assembly, and the modulation generator assembly is connected to the output-voltage balancing compensation module, the loop compensation calculation assembly, the first switch transistor, the second switch transistor, the third switch transistor, and the fourth switch transistor, respectively;

the input-voltage sampling module is configured to sample a first-input-capacitor voltage of the first input capacitor and a second-input-capacitor voltage of the second input capacitor, and determine an input total voltage based on the first-input-capacitor voltage and the second-input-capacitor voltage;
the output-voltage sampling module is configured to sample a first-output-capacitor voltage of the first output capacitor and a second-output-capacitor voltage of the second output capacitor, and determine an output total voltage and an output voltage difference based on the first-output-capacitor voltage and the second-output-capacitor voltage;
the output-current sampling module is configured to sample an output total current corresponding to the output voltage;
the output-voltage balancing compensation module is configured to, based on the output voltage difference determined by the output-voltage sampling module, multiply the output voltage difference and a pre-stored output-voltage balancing compensation coefficient to obtain a balancing compensation result;
the loop compensation calculation assembly is configured to obtain a loop output result based on the output total voltage determined by the output-voltage sampling module and the output total current sampled by the output-current sampling module; and
the modulation generator assembly is configured to determine a wave-emitting duty cycle corresponding to each switch transistor based on the loop output result determined by the loop compensation calculation assembly, the balancing compensation result determined by the output-voltage balancing compensation module, the input total voltage determined by the input-voltage sampling module, and the output total voltage determined by the output-voltage sampling module, wherein the wave-emitting duty cycle corresponding to each switch transistor comprises a first wave-emitting duty cycle corresponding to the first switch transistor, a second wave-emitting duty cycle corresponding to the second switch transistor, a third wave-emitting duty cycle corresponding to the third switch transistor, and a fourth wave-emitting duty cycle corresponding to the fourth switch transistor; and the modulation generator assembly is further configured to transmit a transistor drive signal to each switch transistor based on the first wave-emitting duty cycle, the second wave-emitting duty cycle, the third wave-emitting duty cycle, and the fourth wave-emitting duty cycle to control on or off of a corresponding switch transistor.

6. The circuit of claim 5, wherein the loop compensation calculation assembly comprises a voltage-loop output-result calculation module, a current-loop output-result calculation module, and a minimum-value determination module, wherein the voltage-loop output-result calculation module comprises a voltage sampling calculation compensator and an output voltage loop compensator, the current-loop output-result calculation module comprises a current sampling calculation compensator and an output current loop compensator; and the minimum-value determination module is connected to the voltage-loop output-result calculation module and the current-loop output-result calculation module, respectively;

the voltage-loop output-result calculation module is configured to, via the voltage sampling calculation compensator, calculate based on the output total voltage and a pre-stored output-voltage given value, a voltage error value obtained after compensation; and via the output voltage loop compensator, obtain a voltage loop output result based on the voltage error value;

the current-loop output-result calculation module is configured to, via the current sampling calculation compensator, calculate based on the output total current and a pre-stored output-current given value, a current error value obtained after compensation; and via the output current loop compensator, obtain a current loop output result based on the current error value; and

the minimum-value determination module is configured to determine an output result with a smallest numerical value between the voltage loop output result and the current loop output result, and use the output result with the smallest numerical value as the loop output result, wherein the output result with the smallest numerical value is the voltage loop output result or the current loop output result.

7. The circuit of claim 5, wherein the modulation generator assembly comprises a first modulation generator, a second modulation generator, a third modulation generator, a fourth modulation generator, and a wave-emitting duty cycle calculation module; wherein the wave-emitting duty cycle calculation module is connected to the first modulation generator, the second modulation generator, the third modulation generator, and the fourth modulation generator, respectively, the first modulation generator is connected to the first switch transistor, the second modulation generator is connected to the second switch transistor, the third modulation generator is connected to the third switch transistor, and the fourth modulation generator is connected to the fourth switch transistor;

the wave-emitting duty cycle calculation module is configured to subtract the balancing compensation result from the loop output result to obtain the first wave-emitting duty cycle; add the balancing compensation result to the loop output result to obtain the second wave-emitting duty cycle; multiply the first wave-emitting duty cycle by a ratio of the input total voltage to the output total voltage to obtain the third wave-emitting duty cycle; and multiply the second wave-emitting duty cycle by the ratio of the input total voltage to the output total voltage to obtain the fourth wave-emitting duty cycle;

the first modulation generator is configured to transmit the transistor drive signal to the first switch transistor based on the first wave-emitting duty cycle;

the second modulation generator is configured to transmit the transistor drive signal to the second switch transistor based on the second wave-emitting duty cycle;

the third modulation generator is configured to transmit the transistor drive signal to the third switch transistor based on the third wave-emitting duty cycle; and

the fourth modulation generator is configured to transmit the transistor drive signal to the fourth switch transistor based on the fourth wave-emitting duty cycle.

8. The circuit of claim 1, wherein when a voltage across two ends of the input voltage is greater than a voltage across two ends of the output voltage, the circuit operates as a buck circuit; and when the voltage across two ends of the input voltage is less than the voltage across two ends of the output voltage, the circuit operates as a boost circuit.

9. The circuit of any one of claims 1 to 8, wherein a polarity of the input voltage is opposite to a polarity of the output voltage.

10. An electronic device, comprising the bidirectional non-isolated DC-DC topology control circuit of any one of claims 1 to 9.

FIG. 1a

FIG. 1b

FIG. 1c

FIG. 1d

FIG. 2

FIG. 3

FIG. 4

FIG. 5

FIG. 6

FIG. 7

FIG. 8

## INTERNATIONAL SEARCH REPORT

| International application No. |
| --- |
| **PCT/CN2023/100167** |

**A. CLASSIFICATION OF SUBJECT MATTER**

H02M 3/158(2006.01)i; H02M 1/088(2006.01)i; H02M 1/32(2007.01)i

According to International Patent Classification (IPC) or to both national classification and IPC

**B. FIELDS SEARCHED**

Minimum documentation searched (classification system followed by classification symbols)

IPC: H02M

Documentation searched other than minimum documentation to the extent that such documents are included in the fields searched

Electronic data base consulted during the international search (name of data base and, where practicable, search terms used)

CNTXT, ENTXTC, DWPI, WPABS, ENTXT, CNKI, IEEE: 双向, 升压, 降压, 升降压, 降升压, 电感, 中点, 中性点, 平衡, 均衡, 均压, bidirectional, boost, buck, inductor, neutral, balance

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115995966 A (SHENZHEN WINLINE TECHNOLOGY CO., LTD.) 21 April 2023 (2023-04-21)<br>claims 1-10 | 1-10 |
| X | CN 112993970 A (TSINGHUA UNIVERSITY) 18 June 2021 (2021-06-18)<br>description, paragraphs 78-134, and figures 4-6 | 1-4, 8-10 |
| A | CN 101997409 A (SIEMENS AG) 30 March 2011 (2011-03-30)<br>entire document | 1-10 |
| A | CN 217445060 U (HEFEI HUASI SYSTEM CO., LTD.) 16 September 2022 (2022-09-16)<br>entire document | 1-10 |
| A | US 2009066301 A1 (MATSUSHITA ELECTRIC INDUSTRIAL CO., LTD.) 12 March 2009 (2009-03-12)<br>entire document | 1-10 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 August 2023** | **28 August 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/100167** |

| Patent document cited in search report | | | Publication date (day/month/year) | Patent family member(s) | | | Publication date (day/month/year) |
| --- | --- | --- | --- | --- | --- | --- | --- |
| CN | 115995966 | A | 21 April 2023 | CN | 115995966 | B | 18 July 2023 |
| CN | 112993970 | A | 18 June 2021 | CN | 112993970 | B | 09 September 2022 |
| CN | 101997409 | A | 30 March 2011 | WO | 2011020737 | A1 | 24 February 2011 |
| CN | 217445060 | U | 16 September 2022 | | None | | |
| US | 2009066301 | A1 | 12 March 2009 | US | 7737668 | B2 | 15 June 2010 |
| | | | | JP | 2013059252 | A | 28 March 2013 |
| | | | | JP | 5502970 | B2 | 28 May 2014 |
| | | | | JP | 2009081988 | A | 16 April 2009 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023102880560